# EUROPÄISCHE PATENTSCHRIFT

(11) **EP 1 460 006 B1**
(45) Veröffentlichungstag und Bekanntmachung des Hinweises auf die Patenterteilung: **03.05.2006**
(21) Anmeldenummer: 04004927.2
(22) Anmeldetag: 03.03.2004
(51) Int. Cl.: B65G 27/08

(54) **Vibrations-Linearförderer**
Linear-vibratory conveyor
Convoyeur vibrant à déplacement linéaire

(30) Priorität: 21.03.2003 DE 10312706
(43) Veröffentlichungstag der Anmeldung: 22.09.2004
(73) Patentinhaber: Feintool International Holding, 3250 Lyss (CH)
(72) Erfinder: Krell, Helmut, 98527 Suhl (DE)
(74) Vertreter: Blaumeier, Jörg

(56) Entgegenhaltungen:
- EP-A- 0 529 185
- DE-A- 3 642 183
- US-A- 4 313 535
- US-A- 5 462 155

## Beschreibung

Die Erfindung betrifft einen Vibrations-Linearförderer zum Fördern von Werkstücken und pulverförmigen oder granularen Stoffen, mit einer Nutz- und einer Gegenmasse, die beide gleich groß sind, an einem Schwingsystem separat gelagert sind und zum Fördern über ein elektro-magnetisches Erregerelement bestehend aus einer Magnetspule und einem Magnetanker, die Teil der Nutz- oder der Gegenmasse sind, in eine gegenläufige Schwing- oder Vibrationsbewegung bringbar sind, durch welche Schwing- oder Vibrationsbewegung die auf einem rinnenartigen Förderelement, das Teil der Nutzmasse ist, befindlichen Werkstücke oder Stoffe längs des Förderelements transportiert werden.

Ein solcher Vibrations-Linearförderer ist beispielsweise aus EP 0 529 185 B1, US 5 462 155 oder DE 3 642 183 bekannt. Das Förderprinzip eines solchen Linearförderers beruht auf einem Mikrowurf-Prinzip. Durch die Schwing- oder Vibrationsbewegung des Förderelements werden die auf ihm befindlichen Werkstücke oder Stoffe in Förderrichtung geworfen, wobei die Wurfbewegung zwar minimal ist, sich aufgrund der hohen Schwing- oder Vibrationsfrequenz jedoch eine kontinuierliche Längsbewegung ergibt. Hierüber können z.B. zu verbauende bzw. weiterzugebende Werkstücke in Form von Kleinstbauteilen transportiert oder geordnet werden, die z.B. von einem Vibrationswendelförderer zum Linearförderer gegeben werden und über diesen dann an einen Fertigungsautomaten gegeben werden. Auch ist die Förderung von pulverförmigen oder granularen Stoffen oder dergleichen möglich. Um eine Übertragung von Vibrationen auf einen Tisch oder ein Gestell, an oder auf dem ein solcher Linearförderer angeordnet ist, weitestgehend zu vermeiden ist bei einem Vibrations-Linearförderer der eingangs genannten Art eine Nutz- und eine Gegenmasse vorgesehen, die über ein Erregerelement in eine gegenläufige Schwing- oder Vibrationsbewegung gebracht werden. Sie führen also eine gegensinnige, sinusförmig verlaufende Schwingbewegung aus. Diese Schwingbewegung ist zur Erzeugung der Mikrowurfbewegung schräg nach oben in Förderrichtung gerichtet. Zum Erzeugen der Schwingung ist ein elektro-magnetisches Erregerelement mit Magnetspule samt Magnetkern und einem zugeordneten Magnetanker vorgesehen, wobei die Magnetspule z.B. an der Gegenmasse und der Magnetanker an der Nutzmasse oder umgekehrt angeordnet sind. Bei entsprechendem Betrieb des Erregerelements wird so eine kontinuierliche gegenläufige Bewegung aufgrund der erzeugten Magnetfelder zwischen Magnetspule und Magnetanker hervorgerufen, die sich wiederum auf die jeweils zugeordneten Massen überträgt.

Aus EP 0 529 185 B1 ist ein Linearförderer der eingangs genannten Art bekannt, bei dem die Nutzmasse und die Gegenmasse nebeneinander liegend angeordnet sind, d.h. sie liegen parallel zueinander. Sie sind an zwei einen Teil des Schwingsystems bildenden Federelementen, die bezüglich der Vertikalen schräg stehen, angeordnet. Nachteilig bei einem solchen Linearförderer ist jedoch, dass aufgrund der parallelen Anordnung der Massen die aus den Schwingbeschleunigungen der beiden Massen resultierenden Schwingkräfte zwar in zueinander entgegengesetzter Richtung wirken, aber nicht auf der gleichen Wirklinie. Dies führt dazu, dass zwar trotz gegebener Massengleichheit von Nutz- und Gegenmasse und letztlich gleich großen Reaktionskräften am Fundament, wo also der Linearförderer bodenseitig gelagert ist, sich diese Kräfte zwar aufheben. Jedoch werden aufgrund dieser asymmetrischen Anordnung und dem Auseinanderfallen der Kraftrichtungen Schwing-Drehmomente erzeugt, die eine Kippschwingung des Linearförderers sowie eine Drehschwingung bezüglich der Vertikalen verursachen, was zu seitlichen Schwingungen insbesondere an den Enden des Förderelements führen kann. Hierdurch kann es zu Schwierigkeiten bei der Werkstück- oder Stoffförderung und -übergabe,kommen.

Ein weiterer Nachteil eines derartigen Linearförderers liegt darin, dass seine betriebstechnische Einrichtung relativ kompliziert ist. Um einen Förderbetrieb unter Ausnutzung des Resonanzverhaltens zu ermöglichen ist es zum einen erforderlich, die Nutz- und die Gegenmasse möglichst genau gegeneinander in ihrer Schwingungslagerung abzustimmen, so dass die Eigenfrequenz, mit der jede Masse schwingt, auf die Erregerfrequenz des Erregerelements abgestimmt ist. Dies erfolgt unter entsprechender Justierung der Lagerung der jeweiligen Masse an dem Schwingungssystem bzw. den Federn, was sehr kompliziert ist und viel Erfahrung erfordert. Jede Veränderung der Massenverhältnisse macht eine Neuabstimmung erforderlich. Nun ist es aber in der Praxis häufig so, dass ein flexibler Arbeitsbetrieb angestrebt wird, d.h. dass ein schneller Wechsel beispielsweise zu verbauender Werkstücke seitens einer Fertigungsmaschine angestrebt wird, was zwangsläufig auch dazu führt, dass andere zu verbauende Werkstücke mittels eines Linearförderers angefördert werden müssen. Hierfür wäre häufig das Förderelement auszuwechseln, was jedoch ohne die höchst aufwendige Neueinstellung überhaupt nicht möglich ist.

Der Erfindung liegt damit das Problem zugrunde, einen Linearförderer anzugeben, der einerseits einen Betrieb ohne unerwünschte schwingungsbedingte Nebeneffekte wie Kipp- oder Seitenschwingungen ermöglicht, und der andererseits eine flexible und einfache Einrichtung des Förderers hinsichtlich unterschiedlich zu fördernder Güter zulässt.

Zur Lösung dieses Problems ist bei einem Vibrations-Linearförderer der eingangs genannten Art erfindungsgemäß vorgesehen, dass die gleich großen Nutz- und die Gegenmasse im Wesentlichen übereinander liegen und beidseits symmetrisch zu einer vertikalen Mittelebene aufgebaut sind, in welcher auf einer gemeinsamen Wirklinie die Schwerpunkte der Nutz- und der Gegenmasse liegen, und dass verschiedene Förderelemente im Austausch befestigbar sind, wobei eine elementspezifische Zusatzmasse vorgesehen ist, die an einem Förderelement oder einem sonstigen Teil der Nutzmasse derart angeordnet oder anbringbar und ausgelegt ist, dass das Gesamtgewicht der Nutzmasse sowie die Lage des Nutzmassenschwerpunkts im Wesentlichen gleich bleibt. Durch diese Gleichheit von Nutz- und Gegenmasse entfällt die aufwendige Neuabstimmung des Schwingsystems.

Beim erfindungsgemäßen Linearförderer bzw. dem den Linearförderer und die ihm zugeordneten Förderelemente umfassenden System kommt ein bezogen auf die vertikale Mittelebene symmetrischer Aufbau zum Einsatz, wobei Nutz- und Gegenmasse im Wesentlichen übereinander bzw. ineinander liegend angeordnet sind, soweit dies konstruktiv möglich ist. Dabei sind beide Massen derart konzipiert, dass ihre Schwerpunkte auf einer gemeinsamen Wirklinie liegen, die ihrerseits wiederum senkrecht zur Ebene der Federn, die das Schwingsystem bilden, steht. Diese Wirklinie verläuft genau in der vertikalen Mittelebene, so dass sich insgesamt ein vollkommen symmetrischer Aufbau ergibt. Durch diese entsprechende Positionierung und Auslegung der Massen hinsichtlich ihrer Symmetrie zur Mittelebene sowie hinsichtlich der Lage der Schwerpunkte auf einer gemeinsamen Wirklinie ergibt sich ein gegenläufiger Schwingungsbetrieb, der zu keinen Kipp- oder Seitenschwingungen führt, da sich die Schwingkräfte der Nutz- und der Gegenmasse in ihren absoluten Größen zueinander aufheben und aufgrund der Symmetrie und der Schwerpunktslage keine resultierenden Kräfte erzeugt werden, die außerhalb der zentralen Mittelebene bzw. der Wirklinie wirken würden und zu Schwing-Drehmomenten führen würden, die insbesondere auf das Fundament wirken und an dessen Steifigkeit andernfalls hohe konstruktive Anforderungen stellen würden. Es ergibt sich also insgesamt ein äußerst stabiles und keine ungewollten Störschwingungen erzeugendes System.

Weiterhin ist vorgesehen, dass am Linearförderer bzw. der Nutzmasse unterschiedliche Förderelemente, die ihrerseits wiederum einen Teil der Nutzmasse bilden, austauschbar befestigt sind, wozu entsprechend geeignete Befestigungsmittel, die ein einfaches Lösen und Anbringen ermöglichen, vorgesehen sind. Nachdem zur Förderung unterschiedlicher Werkstücke oder Stoffe oft unterschiedliche Förderelemente benötigt werden ist es nötig, im Hinblick auf die oben beschriebene Symmetrie und Schwerpunktslage sicherzustellen, dass diese Randbedingungen, die einen einwandfreien Betrieb ermöglichen, trotz Änderung des Förderelements nach wie vor eingehalten sind. Um folglich entsprechende Masseänderungen an der Nutzmasse bei Austausch des Förderelements kompensieren zu können und wiederum einen Massengleich zu erreichen, sind elementspezifische Zusatzmassen, die also in ihrem Gewicht exakt bezüglich eines bestimmten Förderelements konzipiert sind, vorgesehen, welche an einem Förderelement oder an einem sonstigen Teil der Nutzmasse angeordnet sind oder werden können und beim Austausch des Förderelements automatisch mit getauscht werden. D.h. durch diese Zusatzmasse wird Massengleichheit gewährleistet. Daneben sind diese Zusatzmassen aber derart ausgelegt und lokal derart anzuordnen oder angeordnet, dass auch die Lage des Nutzmassenschwerpunkts im Wesentlichen gleich bleibt. D.h. die Lage des Nutzmassenschwerpunkts auf der gemeinsamen Wirklinie mit dem Gegenmassenschwerpunkt bleibt trotz Änderung des Förderelements infolge der Verwendung der entsprechend ausgelegten und lokal angeordneten Zusatzmasse gleich.

Dies ermöglicht ein einfaches und flexibles Einrichten des Linearförderers zur Förderung eines anderen Gegenstands, ohne dass große Justierreinstellungen und dergleichen erforderlich sind. Denn die konstruktiven Randbedingungen "Massegleichheit - Symmetrie und Lage der Masseschwerpunkte" ist in jedem Fall gewährleistet. Umstellungen können so von jedem Nutzer ohne spezielle Kenntnisse und mit geringem Zeitaufwand erfolgreich vorgenommen werden.

Als Zusatzmasse kann erfindungsgemäß ein einzelnes Masseelement oder aber mehrere Masseelemente am Förderelement oder an einem sonstigen Teil der Nutzmasse befestigt oder befestigbar sein. Werden mehrere Masseelemente verwendet, so können diese entweder an einem gemeinsamen Punkt angeordnet werden oder aber an versetzten Stellen am Förderelement oder an einem sonstigen Teil der Nutzmasse, je nach Auslegung des Linearförderers.

Sofern der Nutzmassenschwerpunkt an dem Förderelement selbst liegt, kann das oder können die Masseelemente im Wesentlichen im Bereich des Nutzmassenschwerpunkts befestigt oder befestigbar sein.

Im Hinblick auf ein einfaches Einrichten und Anpassen eines Linearförderers ist es ferner zweckmäßig, wenn ein Förderelement höhenvariabel befestigbar ist, um so auf etwaige höhenmäßige Unterschiede an den Übergabestellen von der Zuführeinrichtung, z.B. einem Wendelförderer, zum Linearförderer und vom Linearförderer zur Fertigungsmaschine reagieren zu können. Hierfür sind entsprechende Befestigungselemente an dem Nutzmassenteil, wo ein Förderelement befestigt wird, bzw. am Förderelement selbst vorgesehen, z.B. vertikal geschlitzte Aufnahmen, in denen ein Förderelement höhenverschiebbar angeschraubt werden kann etc.

Das Schwingsystem selbst kann erfindungsgemäß wenigstens zwei Federsysteme umfassen, die jeweils drei parallel angeordnete Federabschnitte aufweisen, wobei die Nutzmasse an den mittleren Federabschnitter: und die Gegenmassen an den beiden äußeren Federabschnitten beider Federsysteme oder umgekehrt angeordnet sind. D.h. auch hinsichtlich der Lagerung der Massen am Schwingsystem bzw. dessen Federsystemen ist ein symmetrischer Aufbau bezüglich der vertikalen Mittelebene, die durch die Mitte des mittleren Federabschnitts läuft, vorgesehen. Ein Federsystem kann aus einer Blattfeder oder aus mehreren ein Paket bildenden Blattfedern bestehen, die oder das unter Bildung dreier Federabschnitte über einen Teil ihrer Länge geschlitzt ist. Alternativ besteht die Möglichkeit, ein Federsystem aus drei separaten Blattfedern oder drei Blattfederpaketen zu bilden. Am unteren Ende ist ein Federsystem jeweils mit einer Basisplatte verbunden, über die der Linearförderer dann z.B. an einem Maschinengestell festgeschraubt wird.

Im Hinblick auf einen möglichst kompakten, symmetrischen Aufbau kann es zweckmäßig sein, wenn die Gegenmasse einen im Wesentlichen U-förmigen Abschnitt aufweist, in dem ein Abschnitt der Nutzmasse aufgenommen ist. Auch eine umgekehrte Ausführungsform, bei der die Nutzmasse einen im Wesentlichen U-förmigen Abschnitt aufweist, in dem ein Abschnitt der Gegenmasse aufgenommen ist, ist denkbar. D.h. soweit möglich greifen die Massen ineinander ein, sind jedoch bezüglich einander noch etwas zur Ermöglichung einer Schwingbewegung beabstandet, so dass sich ein kompakter, kleinformatiger Aufbau ergibt. Der aufgenommene Abschnitt kann im Wesentlichen T-förmig ausgebildet sein.

Der erfindungsgemäße Linearförderer ermöglicht es dem Benutzer, bei fest vorgegebener Gegenmasse variabel unterschiedliche Förderelemente zu verwenden, wobei zum Masseausgleich die beschriebene Zusatzmasse vorgesehen ist. Um unterschiedlich schwere oder unterschiedlich große Gegenstände fördern zu können ist es häufig erforderlich, Linearförderer unterschiedlichen Typs mit unterschiedlich groß ausgelegten Nutz- und Gegenmassen zur Verfügung zu stellen. Um diesbezüglich dem Hersteller des Linearförderers das Zurückgreifen auf standardisierte Bauteile zu ermöglichen ist vorgesehen, eine die standardisierte Gegenmasse vergrössernde Zusatzmasse zu verwenden, wobei die austauschbaren Förderelemente und ihre elementspezifischen Zusatzmassen entsprechend der gesamten Gegenmasse ausgelegt sind. Herstellerseitig kann also nach dieser Erfindungsausgestaltung eine standardisierte Gegenmasse, die eine Art "Grundmasse" darstellt, verwendet werden. Diese dient z.B. zum Aufbau eines Linearförderers eines ersten Typs. Soll ein Linearförderer eines zweiten Typs hergestellt werden, bei dem eine größere Gegen- und Nutzmasse benötigt wird, wird auf die gleiche standardisierte Gegenmasse zurückgegriffen, ihr Gewicht jedoch unter Verwendung einer Zusatzmasse vergrößert. Für einen Linearförderer eines dritten Typs wird eine noch größere Zusatzmasse verwendet. Die Nutzmasse bzw. die austauschbaren Förderelemente und ihre elementspezifischen Zusatzmassen sind in diesem Fall quasi typabhängig ausgelegt und auf die jeweilige gesamte Gegenmasse ausgelegt.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung im Schnitt eines erfindungsgemäßen Linearförderers einer ersten Ausführungsform,
- Fig. 2: eine Aufsicht auf den Linearförderer aus Fig. 1,
- Fig. 3: eine Schnittansicht in Richtung der Linie III - III,
- Fig. 4: eine Schnittansicht in Richtung der Linie IV - IV,
- Fig. 5: eine Schnittansicht in Richtung der Linie V - V,
- Fig. 6: eine Prinzipdarstellung im Schnitt eines Linearförderers einer zweiten Ausführungsform,
- Fig. 7: die Aufsicht auf den Förderer aus Fig. 6,
- Fig. 8: eine Schnittansicht in Richtung der Linie VIII - VIII in Fig. 6,
- Fig. 9: eine Schnittansicht in Richtung der Linie IX - :X,
- Fig. 10: eine Schnittansicht in Richtung der Linie X - X,
- Fig. 11: eine Prinzipskizze im Schnitt einer dritten Ausführungsform eines Linearförderers,
- Fig. 12: eine Aufsicht auf dieser Linearförderer,
- Fig. 13: eine Schnittansicht in Richtung der Linie XIII - XIII,
- Fig. 14: eine Schnittansicht in Richtung der Linie XIV - XIV, und
- Fig. 15: eine Schnittansicht in Richtung der Linie XV - XV.

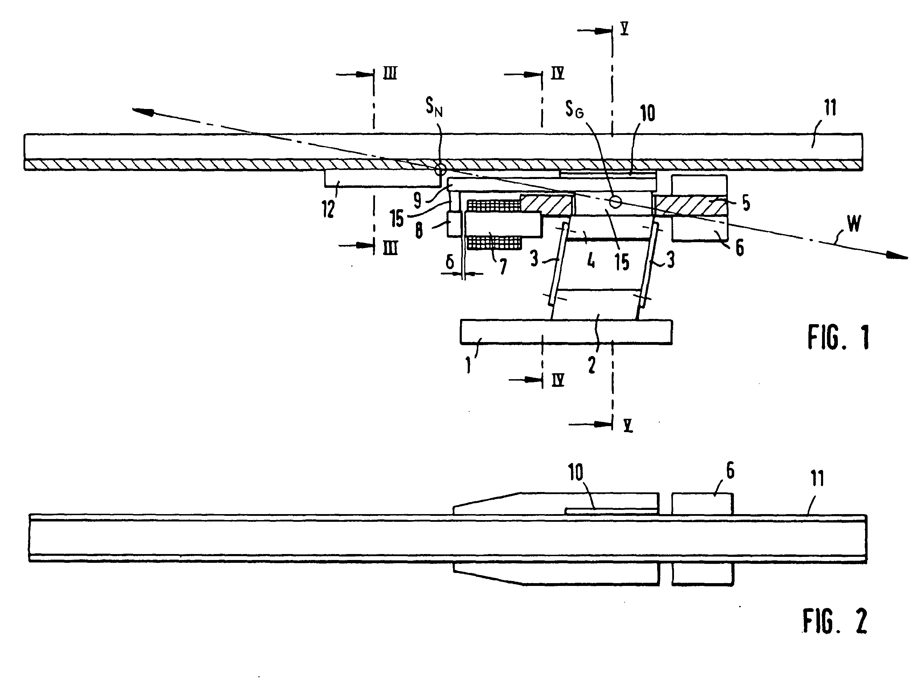

Fig. 1 zeigt eine erste Ausführungsform eines erfindungsgemäßen Vibrationslinearförderers, bestehend aus einer Grundplatte 1, über die der Linearförderer z.B. an einem Maschinentisch befestigt werden kann. An der Grundplatte ist ein Federbock 2 angeordnet, an dem beidseitig zwei Federsysteme 3 schrägstehend im Winkel von ca. 8° bis 12° zur Vertikalen angeordnet sind. Jedes dieser beiden Federsysteme 3 besteht aus einer Blattfeder oder einem Blattfederpaket, die oder das vom oberen Ende aus durch Schlitze 13 in drei Abschnitte 14a, 14b und 14c getrennt ist. Am oberen Ende des mittleren Abschnitts 14c der beiden Federsysteme 3 ist ein Federbock 4 angeordnet, an dem ein Gegenmassensteg 5 mit einer Zusatzmasse 6 angebaut ist. Am vorderen Ende des Gegenmassenstegs 5 befindet sich eine Magnetspule 7, die im Betrieb bestromt wird und eine Magnetkraft erzeugt, die auf einen über einen Luftspalt δ beabstandeten Magnetanker 8 wirkt. Der Federbock 4 bildet zusammen mit dem Gegenmassensteg 5, der Zusatzmasse 6 und der Magnetspule 7 die Gegenmasse, die für die Auslegung eines Gerätetypen immer gleich bleibt und durch den Aufbau auf die Abschnitte 14c der Federelemente 3 frei schwingend gelagert ist. An den oberen Enden der Abschnitte 14a und 14b sind zwei äußere Federböcke 4a befestigt, welche über eine Aufbauplatte 9 miteinander verbunden sind, an der wiederum ein Befestigungsteil 10 vorgesehen ist, an dem ein Förderelement 11, hier eine Förderschiene, angeordnet ist. An der Förderschiene 11 wiederum befindet sich eine Zusatzmasse 12, die individuell an die Schienenmasse angepasst werden muss und die Differenz von Gegenmasse und Nutzmasse ausgleicht, so dass Massengleichheit besteht. Am vorderen Ende der Aufbauplatte 9 ist über ein Verbindungsstück 15 der Magnetanker 8 durch einen Luftspalt δ von der Magnetspule 7 beabstandet angeordnet. Die äußeren Federböcke 4a bilden zusammen mit der Aufbauplatte 9, dem Zwischenklotz 9a, dem Magnetanker 8, dem Befestigungsteil 10, dem Befestigungselement 11 und der Zusatzmasse 12 die Nutzmasse, die durch individuelle Anpassung der Zusatzmasse 12 genau so groß sein muss wie die Gegenmasse. Die Nutzmasse ist über die Abschnitte 14a und 14b der Federsysteme ebenfalls frei schwingend gelagert. Im Betrieb wird die Magnetspule 7 bestromt und erzeugt eine Magnetkraft, die auf den über einen Luftspalt δ beabstandeten Magnetanker 8 wirkt. Da Nutz- und Gegenmasse frei schwingend gelagert sind, ziehen sie sich gegenseitig an, so dass eine gegensinnige Schwingbewegung entsteht.

Nutzmasse und Gegenmasse sind gleich groß ausgelegt, was für eine exakte einander entgegengesetzte Schwingbewegung und einen Ausgleich der durch die Schwingbewegungen resultierenden Reaktionskräfte an Fundament, also der Grundplatte 1, erforderlich ist. Die Zusatzmasse 6 dient dazu, die Gegenmasse entsprechend der Gerätetype auszulegen.

Ersichtlich ist bei dem erfindungsgemäßen Linearförderer ein bezogen auf die Förderrichtung (= Symmetrieachse) symmetrischer Aufbau realisiert. D.h. links und rechts bezogen auf die Symmetrieachse der Förderrichtung bewegen sich aufgrund des symmetrischen Aufbaus gleich große Massen. Daneben sind die beiden Massen in ihrem Aufbau derart ausgelegt, dass die beiden Massenschwerpunkte, nämlich der Nutzmassenschwerpunkt S_{N} und der Gegenmassenschwerpunkt S_{G} auf einer gemeinsamen Wirklinie W liegen, die ihrerseits im Wesentlichen senkrecht zu den Federsystemen steht. Durch diese Auslegung der Nutz- und der Gegenmasse hinsichtlich der Lage ihrer Schwerpunkte wird erreicht, dass sich beim Betrieb auch keine störenden Kipp- und Seitenschwingungen an den Enden des Förderelements 11 ergeben. Die Wirklinie W liegt in der durch die Symmetrieachse der Förderrichtung laufende Vertikalebene, damit also auf der Symmetrieachse.

Das Förderelement 11 selbst ist lösbar an dem Befestigungselement 10 angeordnet. Es kann hier jedweder Befestigungsmechanismus, z.B. unter Verwendung geeigneter Schrauben oder Steck-Rast-Mechanismen, verwendet werden. Ist es nun aufgrund sich ändernder Transportanforderungen notwendig, andere Gegenstände zu transportieren, kann das Förderelement 11 entnommen werden und gegen ein anderes Förderelement ausgetauscht werden, das z.B. breiter oder anders profiliert oder länger ist etc. Um nun das Erfordernis, dass die beiden Schwerpunkte S_{N} und S_{G} auch nach dem Austausch wieder auf der gemeinsamen Wirklinie W liegen, wird an dem neu anzuordnenden Förderelement eine entsprechende Zusatzmasse, wie sie mit der Zusatzmasse 12 dargestellt ist, angeordnet, um zum einen wiederum auf das bereits vorher gegebene Gesamtgewicht der Nutzmasse zu kommen, und zum anderen, um sicherzustellen, dass sich der Schwerpunkt S_{N} der Nutzmasse wieder dort befindet, wo er unter Verwendung des ausgetauschten Förderelements war. Hierzu ist einerseits die Zusatzmasse entsprechend spezifisch auf das neu anzuordnende Förderelement ausgelegt, d.h. diese beiden sind zwingend zusammen zu verwenden, zum anderen ist die Zusatzmasse lokal auch derart positioniert, dass sich die beschriebene Schwerpunktkonstanz ergibt.

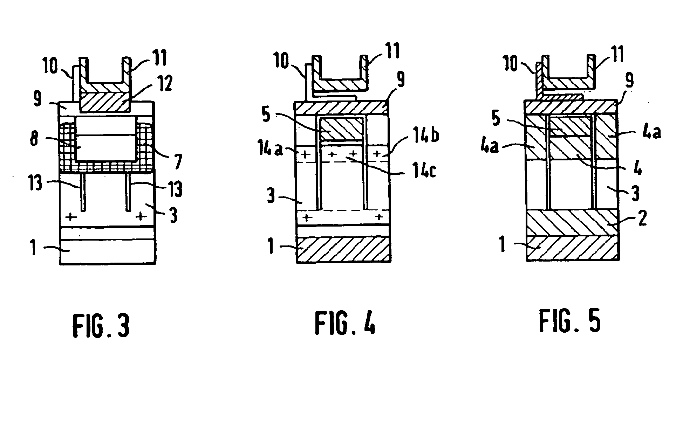

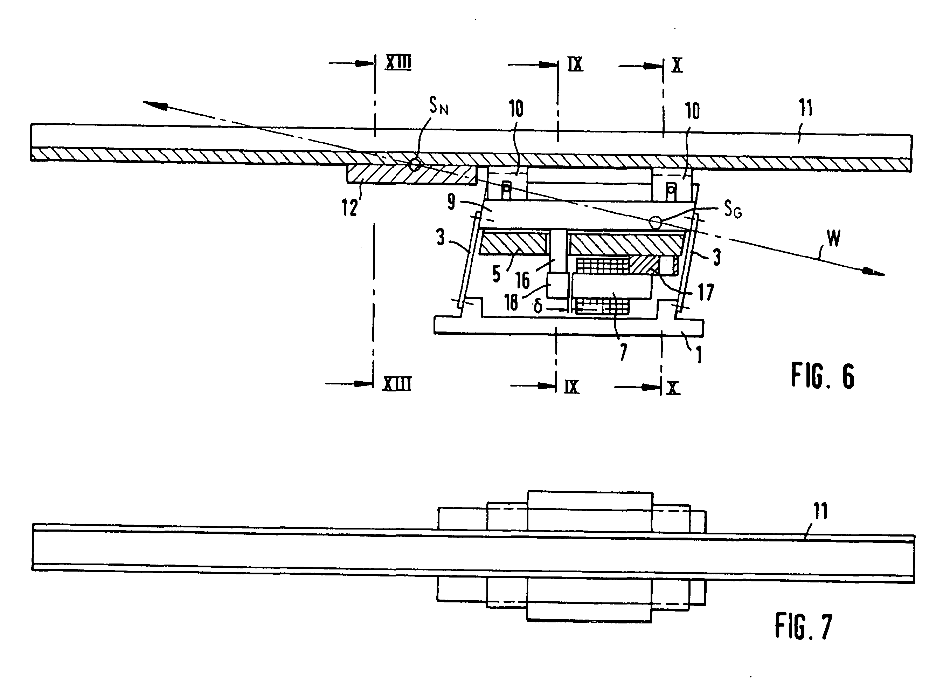

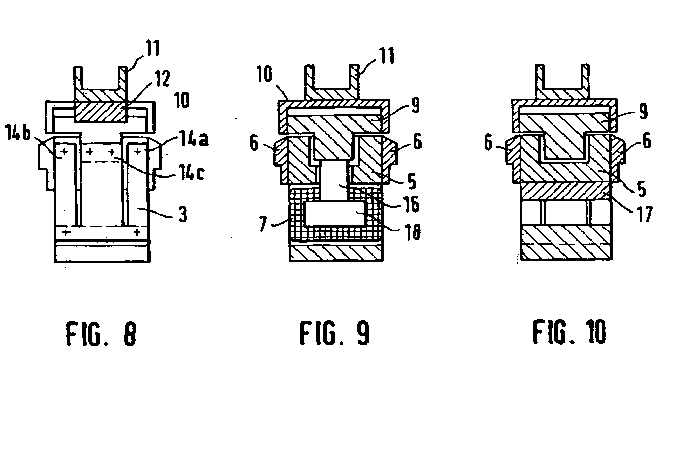

Die Figuren 6 - 10 zeigen eine zweite Ausführungsform eines erfindungsgemäßen Vibrations-Linearförderers, bei dem dem Grunde nach die gleichen Funktionselemente wie bei dem Linearförderer der Figuren 1 - 5 zum Einsatz kommen, jedoch in etwas anderer geometrischer Anordnung. Auch dort ist eine Grundplatte 1 vorgesehen, an der zwei Federsysteme 3 angeordnet sind, bei denen es sich - siehe beispielsweise Fig. 8 - wiederum um längsgeschlitzte Blattfedern oder Blattfederpakete handelt. Die Gegenmasse besteht auch hier aus einer Magnetspule 7 sowie einem Gegenmassensteg 5, an dem die Magnetspule 7 angeordnet ist. Der Gegenmassensteg 5 ist, wie die Figuren 9 und 10 zeigen, im Wesentlichen U-förmig ausgeführt. Demgegenüber ist die Aufbauplatte 9 - siehe die Figuren 9 und 10 - im Wesentlichen T-förmig ausgeführt und greift beabstandet in den Gegenmassensteg 5 ein. An der Aufbauplatte 9 ist auch hier der Magnetanker 8 angeordnet, der über ein entsprechendes Verbindungsstück 16, das den Gegenmassensteg 5 in einer Ausnehmung durchsetzt, mit der Aufbauplatte 9 verbunden ist. An der Aufbauplatte 9 ist das schienenartige Förderelement 11 über entsprechende Befestigungselemente 10, hier mit Vertikalschlitzen versehene Bügel, befestigt. Die Vertikalschlitze ermöglichen eine höhenvariable Anordnung des Förderelements 11 an der Aufbauplatte 9. Wie die Figuren 8 - 10 zeigen ist hier die Aufbauplatte 9 am mittleren Federabschnitt 14c der Federsysteme federnd gelagert, während der Gegenmassensteg 5 an den beiden Federabschnitten 14a und 14b befestigt ist. Auch hier ergibt sich eine separate Bewegungsmöglichkeit, wobei auch hier ein zur Förderrichtung symmetrischer Aufbau realisiert ist. Wird die Magnetspule 7 bestromt, werden die gegenläufigen Bewegungen über die Wechselwirkung der Magnetspule 7 mit dem Magnetanker 8, der auch hier über einen Luftspalt δ beabstandet ist, erzeugt.

Die Nutzmasse besteht auch hier aus dem Förderelement 11 mit angeordnetem Zusatzgewicht 12, den Befestigungselementen 10, der Aufbauplatte 9, dem Verbindungsstück 16 sowie dem Magnetanker 8, während die Gegenmasse aus der Magnetspule 7, einem diese mit dem Gegenmassensteg 5 verbindenden Befestigungsstück 17, und seitlichen, dem Massenabgleich dienenden Zusatzmassen 6 besteht.

Ersichtlich sind auch hier die Nutz- und die Gegenmasse derart konzipiert, dass der Nutzmassenschwerpunkt S_{N} und der Gegenmassenschwerpunkt S_{G} auf einer gemeinsamen Wirklinie W, miteinander fluchtend, stehen, wobei die Wirklinie auch hier im Wesentlichen senkrecht zu den Ebenen der Federsysteme 3 steht.

Wie auch bei der vorher beschriebenen Ausführungsform ist auch hier das Förderelement 11 lösbar und kann gegen ein anderes ausgetauscht werden. Jedes Förderelement 11 ist unter Verwendung eines elementspezifischen Zusatzgewichts 12 derart ausgelegt, dass die Gesamtmasse der Nutzmasse unabhängig vom angeordneten Förderelement gleich bleibt, und dass der Nutzmassenschwerpunkt S_{N} ebenfalls unabhängig vom verwendeten Förderelement im Wesentlichen in der gleichen Lage, also fluchtend mit dem Gegenmassenschwerpunkt S_{G} auf der Wirklinie W liegt. Auch diese Ausgestaltung lässt also ein flexibles Einrichten und Ändern des Linearförderers zu. Im gezeigten Ausführungsbeispiel wird die Zusatzmasse bei dem gezeigten Förderelement 11 im Wesentlichen genau am Schwerpunkt S_{N} angeordnet. Natürlich sind je nach verwendetem Förderelement 11 auch andere Positionierungen der Zusatzmasse 12 möglich bzw. gegebenenfalls erforderlich.

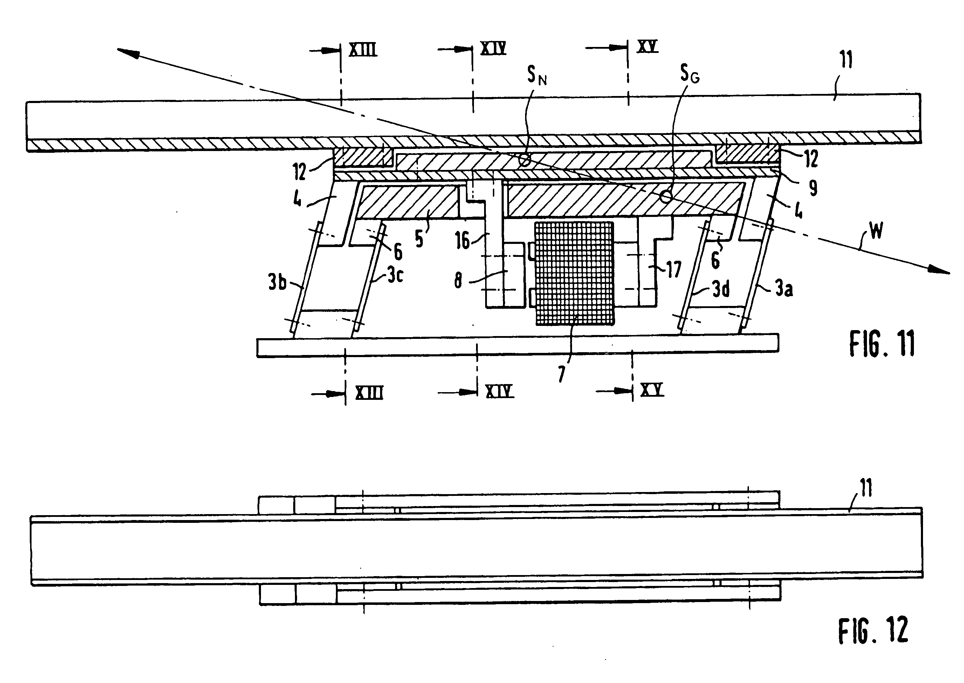

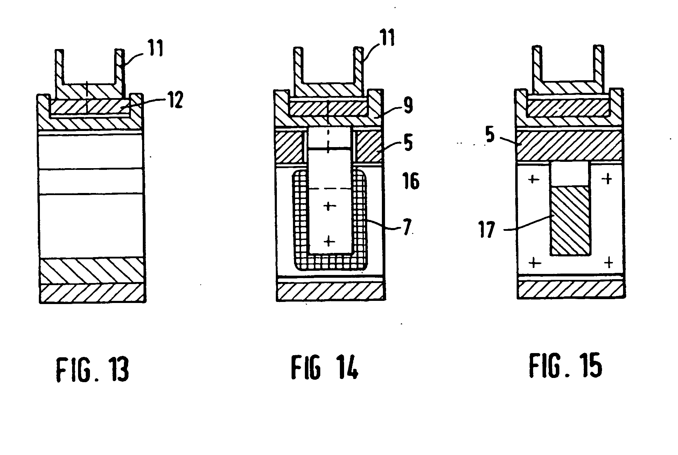

Schließlich zeigen die Figuren 11 - 15 eine dritte Ausführungsform. Diese besteht im Wesentlichen ebenfalls aus entsprechenden Ausführungsformen der vorbeschriebenen Figuren ausgelegten Elementen. Jedoch kommen hier vier Federsysteme 3a, 3b, 3c, 3d zum Einsatz, die hintereinander und miteinander fluchtend geschaltet sind. Wie Fig. 11 zu entnehmen ist, ist die Nutzmasse, bestehend aus der Fördereinrichtung 11, den beiden an dieser angeordneten Zusatzmassen 12, der Aufbauplatte 9, den Federböcken 4, dem Verbindungsteil 16 sowie dem Magnetanker 8, an den Federsystemen 3a, 3b angeordnet. Die Gegenmasse, bestehend aus dem Gegenmassensteg 5, dem Verbindungsteil 17, den Federböcken und der Magnetspule 7, ist an den inneren Federsystemen 3c und 3d angeordnet. Beide können auch hier separat und gegengleich zueinander bei Betrieb der Magnetspule 7 schwingen. Auch hier ist ein symmetrischer Aufbau bezüglich der Förderrichtung realisiert.

Ferner sind auch hier die Nutz- und die Gegenmasse derart ausgelegt, dass der Nutzmassenschwerpunkt S_{N} und der Gegenmassenschwerpunkt S_{G} auf einer gemeinsamen Wirklinie W, die im Wesentlichen senkrecht auf der Ebene der Federsysteme steht, liegen. Dies ändert sich auch bei dieser Ausführungsform bei einem Austausch des Förderelements 11 nicht, jedes Förderelement 11 sowie die elementspezifischen Zusatzgewichte 12 sind derart ausgelegt, dass unabhängig vom verwendeten Förderelement nebst Zusatzgewichten der Nutzmassenschwerpunkt S_{N} im Wesentlichen unverändert bleibt.

## Patentansprüche

1. Vibrations-Linearförderer zum Fördern von Werkstücken und pulverförmigen oder granularen Stoffen, mit einer Nutz- und einer Gegenmasse, die beide gleich groß sind, an einem Schwingsystem separat gelagert sind und zum Fördern über ein elektro-magnetisches Erregerelement bestehend aus einer Magnetspule (7) und einem Magnetanker (8), die beide Teil der Nutz- bzw. Gegenmasse sind, in eine gegenläufige Schwing- oder Vibrationsbewegung bringbar sind, durch welche Schwing- oder Vibrationsbewegung die auf einem rinnenartigen Förderelement (11), das Teil der Nutzmasse ist, befindlichen Werkstücke oder Stoffe längs des Förderelements (11) transportiert werden, wobei die Nutz- und die Gegenmasse beidseits symmetrisch zu einer vertikalen Mittelebene aufgebaut sind, in welcher auf einer gemeinsamen Wirklinie (W) die Schwerpunkte (S_{N}, S_{G}) der Nutz- und der Gegenmasse liegen, wobei die Nutz- und Gegenmasse über- oder ineinander liegend aufgebaut sind, **dadurch gekennzeichnet, dass** verschiedene Förderelemente (11) im Austausch befestigbar sind, wobei an jedem im Austausch befestigbaren Förderelement (11) wenigstens eine elementspezifische Zusatzmasse (12) angeordnet ist, die bei Austausch des Förderelements (11) unmittelbar mit diesem ausgetauscht wird, und derart angeordnet und ausgelegt ist, dass bei befestigtem Förderelement (11) das Gesamtgewicht der Nutzmasse sowie die Lage des Nutzmassenschwerpunkts (S_{N}) gleich bleibt, wobei das Gesamtgewicht der Nutzmasse dem der Gegenmasse entspricht.

2. Vibrations-Linearförderer nach Anspruch 1, **dadurch gekennzeichnet, dass** als Zusatzmasse (12) ein oder mehrere Masseetemente an dem Förderelement (11) befestigt sind.

3. Vibrations-Linearförderer nach Anspruch 2, **dadurch gekennzeichnet, dass** die mehreren Masseelemente an einem gemeinsamen Punkt oder an versetzten Stellen am Förderelement (11) befestigt sind.

4. Vibrations- Linearförderer nach Anspruch 3, **dadurch gekennzeichnet, dass** der Nutzmassenschwerpunkt (S_{N}) in dem Förderelement (11) selbst liegt und das oder die Massenelemente im Wesentlichen im Bereich des Nutzmassenschwerpunkts (S_{N}) befestigt ist.

5. Vibrations-Linearförderer nach einem der vorangehenden Ansprüche, **dadurch gekennzeichnet, dass** ein Förderelement (11) höhenvariabel befestigbar ist.

6. Vibrations-Linearförderer nach einem der vorangehenden Ansprüche, **dadurch gekennzeichnet, dass** das Schwingsystem wenigstens zwei Federsysteme (3) umfasst, die jeweils drei parallel angeordnete Federabschnitte (14a, 14b, 14c) aufweisen, wobei die Nutzmasse an den mittleren Federabschnitten (14c) und die Gegenmasse an den beiden äußeren Federabschnitten (14a, 14b) beider Federsysteme (3) oder umgekehrt angeordnet sind.

7. Vibrations-Linearförderer nach Anspruch 6, **dadurch gekennzeichnet, dass** ein Federsystem (3) aus einer Blattfeder oder aus mehreren ein Paket bildenden Blattfedern besteht, die oder das unter Bildung dreier Federabschnitte (14a, 14b, 14c) über einen Teil ihrer Länge geschlitzt ist, oder dass ein Federsystem aus drei separaten Blattfedern oder drei Blattfederpaketen besteht.

8. Vibrations-Linearförderer nach einem der vorangehenden Ansprüche, **dadurch gekennzeichnet, dass** die Gegenmasse einen im Wesentlichen U-förmigen Abschnitt (5) aufweist, in dem ein Abschnitt der Nutzmasse aufgenommen ist, oder dass die Nutzmasse einen im Wesentlichen U-förmigen Abschnitt aufweist, in dem ein Abschnitt der Gegenmasse aufgenommen ist.

9. Vibrations-Linearförderer nach Anspruch 8, **dadurch gekennzeichnet, dass** der aufgenommene Abschnitt im Wesentlichen T-förmig ist.

10. Vibrations-Linearförderer nach einem der vorangehenden Ansprüche, **dadurch gekennzeichnet, dass** eine die standardisierte Gegenmasse vergrö-ßernde Zusatzmasse vorgesehen ist, wobei die austauschbaren Förderelemente und ihre elementspezifischen Zusatzmassen entsprechend der gesamten Gegenmasse ausgelegt sind.

## Claims

1. Linear vibratory conveyor for conveying workpieces and powdered or granular materials, having a useful mass and a counter-mass, both of which are equal in size, are mounted separately on an oscillation system, and are capable of being set in opposite vibratory motion in order to convey via an electromagnetic exciter element consisting of a magnetic coil (7) and a magnetic armature (8), both being parts of the useful or counter-mass, this oscillatory or vibratory motion causing workpieces or materials located on a gutter-like conveying element (11) - which is part of the useful mass - to be conveyed along the conveying element (11), the useful and the counter-mass being so built up symmetrically on either side of a vertical central plane, in which on a common line of action (W) the points of gravity (S_{N}, S_{G}) of the useful mass and of the counter-mass lie, the useful and counter-mass being built up one over or in the other, **characterised in that** various conveying elements (11) are fixable in exchange, in which case on each conveying element (11) fixable in exchange at least one dedicated additional mass (12) is disposed, which is immediately exchanged with the conveying element (11) when this is exchanged, and which is so arranged and contrived that when the conveying element (11) is fixed the overall weight of the useful mass and the position of the useful mass point of gravity (S_{N}) remain the same, in which case the overall weight of the useful mass is the same as that of the counter-mass.

2. Linear vibratory conveyor according to claim 1, **characterised in that** as an additional mass (12) one or more mass elements are fixed to the conveying element (11).

3. Linear vibratory conveyor according to claim 2, **characterised in that** the plural mass elements are fixed to a common point or to points staggered along the conveying element (11).

4. Linear vibratory conveyor according to claim 3, **characterised in that** the useful mass point of gravity (S_{N}) lies in the conveying element (11) itself and the mass element(s) is/are fixed substantially in the region of the useful mass point of gravity (S_{N}).

5. Linear vibratory conveyor according to one of the preceding claims, **characterised in that** a conveying element (11) may be fixed at a variable height.

6. Linear vibratory conveyor according to one of the preceding claims, **characterised in that** the oscillation system comprises at least two spring systems (3), each of which has three spring sections (14a, 14b, 14c) arranged in parallel, the useful mass being disposed on the middle spring sections (14c) and the counter-mass on the two outer spring sections (14a, 14b) of the two spring systems (3), or vice versa.

7. Linear vibratory conveyor according to claim 6, **characterised in that** a spring system (3) consists of a leaf spring or of plural leaf springs forming a package, which is/are slotted over part of their length to form three spring sections (14a, 14b, 14c), or **in that** a spring system consists of three separate leaf springs or three leaf spring packages.

8. Linear vibratory conveyor according to one of the preceding claims, **characterised in that** the counter-mass has a substantially U-shaped section (5), in which a section of the useful mass is received, or **in that** the useful mass has a substantially U-shaped section in which a section of the counter-mass is received.

9. Linear vibratory conveyor according to claim 8, **characterised in that** the section received is substantially T-shaped.

10. Linear vibratory conveyor according to one of the preceding claims, **characterised in that** an additional mass which increases the standardised counter-mass is provided, the exchangeable conveying elements and their dedicated additional masses being arranged according to the overall counter-mass.

## Revendications

1. Convoyeur linéaire à vibrations destiné à transporter des pièces et des matières pulvérulentes ou granulaires, comportant une masse utile et une contre-masse, qui ont toutes deux la même dimension, sont montées séparément sur un système oscillant et qui, pour assurer le transport, peuvent être amenées dans un mouvement d'oscillation ou de vibration en sens opposé par l'intermédiaire d'un élément d'excitation électromagnétique, formé par une bobine magnétique (7) et un induit magnétique (8), qui font tous deux partie de la masse utile ou de la contre-masse, les pièces ou matières disposées sur un élément convoyeur (11) en forme de goulotte, qui fait partie de la masse utile, pouvant être transportées le long de l'élément convoyeur (11) par ledit mouvement d'oscillation ou de vibration, la masse utile et la contre-masse étant montées symétriquement de part et d'autre d'un plan médian vertical, dans lequel les centres de gravité (S_{N}, S_{G}) de la masse utile et de la contre-masse sont situés sur une ligne d'action (W) commune, la masse utile et la contre-masse étant superposées ou emboîtées, **caractérisé en ce que** différents éléments convoyeurs (11) peuvent être fixés de manière amovible, sur chaque élément convoyeur (11), apte à être fixé de manière amovible, étant agencée au moins une masse supplémentaire (12), spécifique à l'élément, qui, lors d'un remplacement de l'élément convoyeur (11), est remplacée directement avec celui-ci, et est agencée et conçue de telle sorte que, lorsque l'élément convoyeur (11) est fixé, le poids total de la masse utile, ainsi que la position du centre de gravité de la masse utile (S_{N}) ne varient pas, le poids total de la masse utile correspondant à celui de la contre-masse.

2. Convoyeur linéaire à vibrations selon la revendication 1, **caractérisé en ce qu'**un ou plusieurs éléments de masse formant la masse supplémentaire (12) sont fixés sur l'élément convoyeur (11).

3. Convoyeur linéaire à vibrations selon la revendication 2, **caractérisé en ce que** la pluralité d'éléments de masse sont fixés au niveau d'un point commun ou en différents emplacements sur l'élément convoyeur (11).

4. Convoyeur linéaire à vibrations selon la revendication 3, **caractérisé en ce que** le centre de gravité (S_{N}) de la masse utile est situé dans l'élément convoyeur (11) lui-même et le ou les éléments de masse est/sont fixé(s) sensiblement dans la zone du centre de gravité (S_{N}) de la masse utile.

5. Convoyeur linéaire à vibrations selon l'une quelconque des revendications précédentes, **caractérisé en ce qu'**un élément convoyeur (11) peut être fixé de manière variable en hauteur.

6. Convoyeur linéaire à vibrations selon l'une quelconque des revendications précédentes, **caractérisé en ce que** le système oscillant comporte au moins deux systèmes de ressort (3), qui comportent chacun trois parties (14a, 14b, 14c) agencées parallèlement, la masse utile étant agencée sur les parties centrales (14c) et la contre-masse sur les deux parties extérieures (14a, 14b) des deux systèmes de ressort (3) ou inversement.

7. Convoyeur linéaire à vibrations selon la revendication 6, **caractérisé en ce qu'**un système de ressort (3) est formé par un ressort à lame ou par plusieurs ressorts à lame formant un paquet, qui est ou sont fendus sur une partie de leur longueur pour former trois parties (14a, 14b, 14c), ou **en ce qu'**un système de ressort est formé par trois ressorts à lame séparés ou trois paquets de ressorts à lame.

8. Convoyeur linéaire à vibrations selon l'une quelconque des revendications précédentes, **caractérisé en ce que** la contre-masse comporte une partie (5) sensiblement en forme de U, dans laquelle est reçue une partie de la masse utile, ou **en ce que** la masse utile comporte une partie (5) sensiblement en forme de U, dans laquelle est reçue une partie de la contre-masse.

9. Convoyeur linéaire à vibrations selon la revendication 8, **caractérisé en ce que** la partie reçue est sensiblement en forme de T.

10. Convoyeur linéaire à vibrations selon l'une quelconque des revendications précédentes, **caractérisé en ce qu'**il est prévu une masse supplémentaire agrandissant la contre-masse standard, les éléments convoyeurs remplaçables et leurs masses supplémentaires, spécifiques à chaque élément, étant conçus conformément à la totalité de la contre-masse.
